# DEMANDE DE BREVET EUROPEEN

(11) **EP 0 797 163 A1**
(43) Date de publication de la demande: **24.09.1997**
(21) Numéro de dépôt: 97400610.8
(22) Date de dépôt: 19.03.1997
(51) Int. Cl.: G06F 17/30

(54) **Répertoire électronique à commande interactive**

(30) Priorité: 21.03.1996 FR 9603515
(71) Demandeur: FRANCE TELECOM, 75015 Paris (FR)
(72) Inventeur: Gaillard, Jean-Pierre, 75015 Paris (FR)
(74) Mandataire: Dubois-Chabert, Guy

(57) **Abrégé**

Répertoire électronique comprenant :
- une base de données (16) avec au moins un fichier (18a, 18b, 18c), chaque fichier comportant des informations correspondant à des caractères alphanumériques et associées respectivement à une pluralité de références du répertoire,
- au moins une interface d'entrée (22a, 22b) sur laquelle un utilisateur peut entrer au moins un caractère alphanumérique pour rechercher une référence,
- au moins un processeur (20) pour sélectionner dans au moins un fichier des références comportant chaque caractère alphanumérique saisi, et
- au moins une interface de sortie (26a, 26b) pour transmettre à l'utilisateur les informations associées à chaque référence sélectionnée.

## Description

### Domaine technique

La présente invention concerne un répertoire électronique à commande interactive.

L'invention trouve des applications soit sur des réseaux téléphoniques privés, soit comme un service offert aux abonnés du réseau téléphonique public. Le répertoire de l'invention peut aussi être tout simplement intégré dans un terminal de communication, tel qu'un poste téléphonique ou un modem du type Minitel, par exemple.

### Etat de la technique antérieure

L'augmentation de la longueur des numéros d'appel à composer, qui peuvent atteindre 10 chiffres ou plus, nécessite de la part de l'utilisateur des réseaux téléphoniques et de communication un effort de mémoire croissant pour obtenir son correspondant ou le service qu'il souhaite.

Pour faciliter la mémorisation des numéros d'appel, un certain nombre d'équipements de télécommunication présentent un système de numérotation abrégée. Il s'agit par exemple d'une numérotation abrégée sur des postes téléphoniques permettant de mettre en mémoire une dizaine ou quelques dizaines de numéros d'appel.

Les téléphones publics ou publiphones permettent également une numération abrégée par l'usage d'une carte à répertoire, spécialement adaptée. Une numérotation abrégée est également disponible sous la forme d'une liste de références ou de correspondants sur des modems de type Minitel 12.

Les systèmes connus de mémorisation et de recherche de numéros peuvent être équipés d'un "navigateur", c'est-à-dire d'un curseur, sous la forme d'une flèche, se déplaçant le long d'une liste affichée sur un écran. Ce système permet de sélectionner une entrée, c'est-à-dire les coordonnées d'un correspondant, au moyen d'un critère alphanumérique tel que, par exemple, le nom du correspondant.

Les systèmes d'aide à la mémorisation et à la recherche des numéros, exposés ci-dessus, souffrent cependant d'un certain nombre de limitations et ne permettent pas toujours de résoudre le problème de la numérotation, notamment avec la multiplication des périphériques de communication.

A titre d'exemple, le nombre de numéros mémorisables sur les périphériques de communication usuels, tels que le téléphone, est relativement limité.

Le nombre de numéros est limité non seulement par la capacité de mémoire des dispositifs considérés, mais aussi et surtout par la faculté de l'utilisateur de mémoriser un grand nombre de codes d'une numérotation abrégée, même si ceux-ci comprennent un petit nombre de chiffres.

Le problème de mémorisation des codes de numérotation abrégée se pose de façon particulièrement aiguë lorsqu'en raison d'un défaut d'alimentation, dû, par exemple, à une pile usée, la mémoire du périphérique de communication est effacée. Il faut dans ce cas soit reprogrammer la mémoire avec des codes, de façon parfaitement identique, soit tâcher de se souvenir des évolutions de la programmation de la mémoire.

Un problème se pose aussi avec la multiplication des périphériques de communication. L'utilisateur dispose souvent d'une pluralité d'appareils de communication, chez lui, au bureau, dans la voiture, etc. Lorsque chacun de ces appareils dispose de son propre répertoire de numéros abrégés, il devient quasiment impossible de faire le lien entre les différents correspondants ou services, et leur numéro abrégé respectif sur chaque appareil.

Une autre difficulté tient à la modification des numérotations en fonction du lieu géographique d'où on effectue un appel. Ainsi, un numéro d'appel mémorisé, valable pour un appel d'un correspondant à partir d'un pays donné, n'est plus utilisable dans un autre pays, en raison de préfixes ou autres codes qui doivent lui être adjoints.

Par ailleurs, les systèmes par navigateur, évoqués ci-dessus, qui certes permettent la mémorisation d'une liste de numéros relativement importante, ne permettent pas d'accéder facilement aux informations mises en mémoire.

En effet, les numéros sont classés selon un classement unique, généralement par ordre alphabétique des correspondants ou services associés. Ainsi, si la liste des références est longue et que l'utilisateur n'a pas le souvenir exact du critère alphanumérique d'accès, par exemple le nom du correspondant, la recherche d'un numéro peut être fastidieuse voire impossible.

Il apparaît ainsi que, malgré les aides à la mémorisation existantes à l'heure actuelle, l'utilisateur doit fournir un effort considérable pour se souvenir des numéros ou codes d'appel de ses correspondants. Cet effort est d'autant plus important qu'un numéro est effectué rarement.

Un but de la présente invention est de proposer un répertoire électronique permettant de surmonter les difficultés mentionnées ci-dessus.

Un but est également de permettre la gestion centralisée les numéros d'appel des correspondants et services demandés par un ou plusieurs utilisateurs.

Un autre but est de permettre un accès facile et rapide à l'information ou au numéro recherché quel que soit le lieu géographique de l'appel.

Un but est encore de permettre à l'utilisateur de retrouver une référence du répertoire à partir de souvenirs même très partiels sur le numéro, sur le correspondant ou sur le service associé.

Un but est enfin de proposer un répertoire unique pour l'ensemble des périphériques de communication de chaque utilisateur.

### Exposé de l'invention

Pour atteindre les buts mentionnés ci-dessus, l'invention a plus précisément pour objet un répertoire électronique comprenant :
- une base de données avec au moins un fichier, chaque fichier comportant des informations correspondant à des caractères alphanumériques et associées respectivement à une pluralité de références du répertoire,
- au moins une interface d'entrée sur laquelle un utilisateur peut entrer au moins un caractère alphanumérique pour rechercher une référence,
- au moins un processeur pour sélectionner dans au moins un fichier des références comportant chaque caractère alphanumérique saisi,
- au moins une interface de sortie pour transmettre à l'utilisateur les informations associées à chaque référence sélectionnée.

On entend par référence au sens de la présente invention, un ensemble d'informations comprenant notamment le nom d'un correspondant ou d'un service et le ou les numéros d'appel qui lui sont associés.

Les informations d'une référence peuvent aussi comporter d'autres indications telles qu'une adresse, un code d'accès sur un réseau d'informations de type E-mail, une adresse d'ordinateur, une indication de la fonction d'une personne, etc.

Dans une utilisation particulière du répertoire, chaque fichier peut être associé en particulier à un utilisateur ou à un groupe d'utilisateurs.

Le fichier comporte alors l'ensemble des références utilisées ou programmées par le ou les utilisateurs.

Selon une réalisation avantageuse du répertoire, celui-ci peut être équipé d'une interface de sortie apte à transmettre à l'utilisateur une information l'invitant à entrer au moins un caractère alphanumérique supplémentaire sur l'interface d'entrée lorsqu'un nombre de références sélectionnées est supérieur à un nombre prédéterminé, et à transmettre à l'utilisateur lesdites informations associées aux références sélectionnées lorsque le nombre de références sélectionnées est inférieur ou égal au nombre prédéterminé.

Le nombre prédéterminé de références dépend essentiellement de la capacité d'affichage de l'interface de sortie. Ce nombre est compris, par exemple, entre 1 et 10.

Ces caractéristiques permettent à un utilisateur d'effectuer une recherche interactive et intuitive d'une référence.

Dans un premier temps, l'utilisateur compose sur l'interface d'entrée un ou plusieurs caractères alphanumériques qui correspondent à des souvenirs qu'il a de la référence recherchée. Il s'agit par exemple du prénom d'un correspondant, le début de son numéro de téléphone, etc.

Lorsque le nombre de références en mémoire comportant ces caractères est faible, toutes les références peuvent être affichées sur l'interface de sortie.

Ce cas est le plus fréquent. Il repose sur le fait que parmi les numéros et les noms de personnes composant un répertoire particulier il y a peu d'éléments redondants. La saisie de trois ou quatre caractères alphanumériques seulement permet en général d'extraire la référence recherchée.

Si dans un cas particulier un grand nombre de références comportent les mêmes caractères composés par l'utilisateur, la saisie d'un ou plusieurs caractères supplémentaires permet de limiter la liste des références affichées.

De façon préférentielle, le processeur peut être programmé de sorte que, lorsque l'utilisateur entre une série d'un ou plusieurs caractères, le processeur sélectionne les références comprenant la série de caractères dans l'ordre dans lequel elle est composée.

Il convient toutefois de souligner que l'utilisateur peut entrer un ou plusieurs caractères ou une ou plusieurs chaînes de caractères alphanumériques, constituées chacune d'au moins un caractère quelconque, et ce, dans un ordre quelconque par rapport aux références de la base de données. D'autre part, la ou les chaîne(s) entrée(s) par l'utilisateur a (ont) une position indifférente par rapport aux caractères alphanumériques de la (ou des) chaine(s) correspondante(s) trouvée(s) dans la base.

Le tableau I ci-après donne un exemple d'un fichier comprenant seulement quatre références.

Les références comportent dans l'exemple du tableau I les noms de personnes ou de services et leur numéro de téléphone. Certaines références indiquent également la fonction des personnes, leur entreprise, et d'autres numéros d'appel (E-mail, IP).

Dans la suite du texte, il est fait référence au tableau I pour illustrer différentes possibilités d'un répertoire conforme à l'invention.

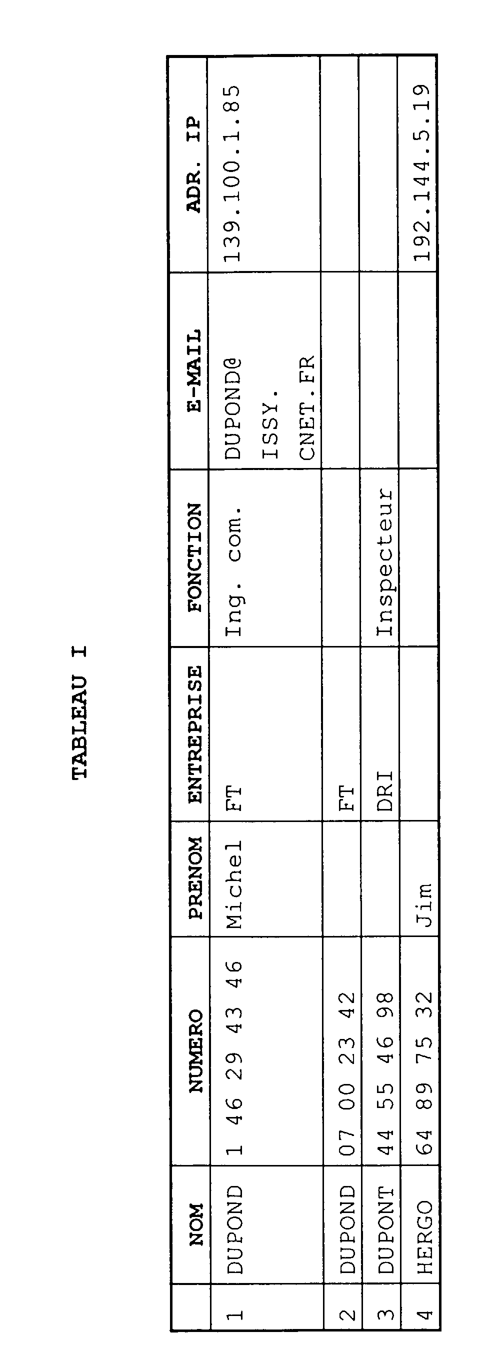

La saisie des caractères "4346" permet d'extraire du fichier indiqué au tableau I la première ligne qui est la seule à contenir tous ces caractères pris dans cet ordre. Ces caractères forment la désinence du numéro de téléphone. La saisie des caractères 0700 aurait permis de sélectionner la deuxième ligne dans laquelle ces caractères correspondent à la racine du numéro de téléphone.

Toujours à titre d'illustration, la saisie des caractères "FT" permet de sélectionner les lignes 1 et 2 du fichier correspondant au tableau I.

Les références sélectionnées sont affichées et l'utilisateur peut alors choisir de composer un numéro d'appel de l'une de ces lignes avec une commande de validation adaptée.

En imaginant qu'un grand nombre de références comportent les caractères "FT" et que le nombre de lignes sélectionnées devient trop important, l'utilisateur est invité à entrer des caractères supplémentaires. Il peut par exemple entrer alors tout ou partie du nom "DUPOND", et ce dans un ordre quelconque.

Le répertoire conforme à l'invention permet aussi à un utilisateur de rechercher une référence à partir de liens existant entre différentes références.

A titre d'exemple, si un utilisateur se souvient de la racine "0700" du numéro d'appel de l'une des personnes d'une entreprise, il compose ces caractères et la ligne 2 du tableau I est affichée. A partir de là, il peut choisir de composer "FT" pour sélectionner toutes les références du répertoire correspondant à des personnes de l'entreprise "FT".

Le répertoire électronique conforme à l'invention peut être un répertoire local intégré directement dans un poste téléphonique ou tout autre terminal péri-informatique. Toutefois, selon un aspect particulier de l'invention, le répertoire peut comporter un serveur central incluant la base de données, et au moins un terminal comprenant les interfaces de saisie et de sortie. Le ou les terminaux sont reliés au serveur central par un réseau de télécommunications. Le serveur et chaque terminal comportent des moyens de téléchargement pour transférer des informations de fichiers sélectionnés par l'utilisateur du serveur central vers chaque terminal.

Grâce au serveur central, l'utilisateur peut consulter son répertoire à partir d'une pluralité de terminaux de communication se trouvant en différents endroits géographiques.

Par ailleurs, en utilisant un serveur central, un répertoire unique peut être utilisé par un grand nombre de personnes. Il est ainsi possible de créer un réseau d'abonnés à ce répertoire. L'ensemble des références du répertoire sont alors centralisées en une seule base de données. Cette mesure permet non seulement d'éviter qu'une référence ne figure plusieurs fois dans le répertoire, mais aussi de réduire le temps d'accès à l'information.

Selon une réalisation particulière du répertoire le serveur central inclut le processeur pour sélectionner les références. Ainsi, l'utilisateur transmet au serveur central les caractères alphanumériques pour la recherche, par l'intermédiaire du réseau de télécommunications et en utilisant son terminal, et, lorsque la ou les références correspondant aux caractères saisis sont trouvées, l'unité centrale transfère vers le terminal les seules informations du fichier correspondant aux références sélectionnées.

Selon une variante, le serveur central ne contient pas le processeur de sélection. Un tel processeur est alors installé dans chaque terminal. Les informations concernant l'ensemble d'un fichier sélectionné par l'utilisateur sont alors transférées vers le terminal périphérique. La recherche d'une ou plusieurs références contenant les caractères saisis est alors effectuée localement dans chaque terminal.

Chaque utilisateur peut disposer sur le serveur d'un fichier qui est une copie partielle personnelle de la base de données, correspondant aux numéros de ses correspondants les plus fréquemment appelés.

Le fichier de chaque utilisateur peut être mis à jour en y ajoutant une référence chaque fois que l'utilisateur compose le numéro d'une référence de la base de données centrale qui ne figure pas dans son fichier. Les références peuvent aussi être supprimées si un numéro correspondant n'est pas composé pendant un certain temps.

Un système de mise à jour des fichiers des utilisateurs peut aussi être programmé pour ne retenir dans les fichiers que les références sélectionnées avec une fréquence supérieure à une fréquence prédéterminée. Il est ainsi possible d'éliminer les références sélectionnées, par exemple, moins d'une fois par an.

Pour contrôler l'accès à un répertoire téléphonique avec un serveur central tel que décrit, celui-ci peut comporter des moyens d'authentification de chaque utilisateur. Ces moyens d'authentification peuvent consister, par exemple, en une clé à code numérique. Ainsi, avant de consulter le répertoire, chaque utilisateur doit composer un code d'accès.

Conformément à un autre aspect avantageux de l'invention, le répertoire peut être équipé d'un système de conversion des informations des fichiers en fonction de la situation géographique du terminal à partir duquel le répertoire est consulté.

Le système de conversion permet, en particulier, d'ajouter aux numéros d'appel des références les préfixes nécessaires pour joindre le correspondant. Les préfixes sont alors adaptés en fonction du lieu géographique d'où l'appel doit être effectué, c'est-à-dire en l'occurrence, du lieu géographique d'où le répertoire est consulté.

Grâce à cette mesure, un utilisateur peut quel que soit le lieu géographique à partir duquel il veut joindre un correspondant, consulter le répertoire et obtenir exactement le numéro à composer.

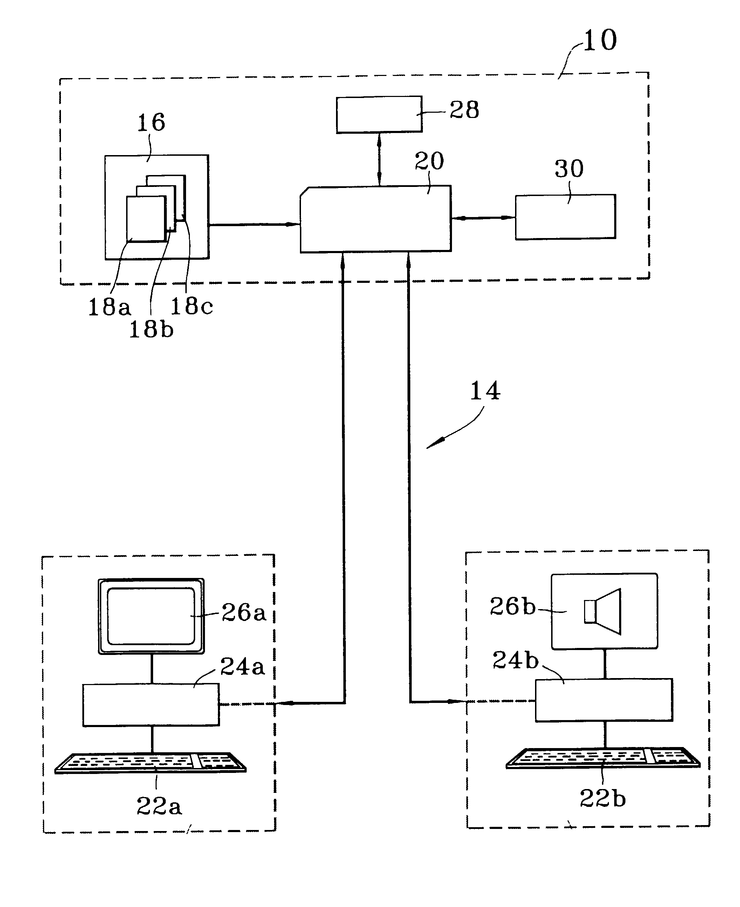

De toute façon, les caractéristiques et avantages de l'invention apparaîtront mieux à la lumière de la description qui va suivre. Cette description porte sur les exemples de réalisation, donnés à titre explicatif et non limitatif, en se référant à la figure du dessin annexé.

### Brève description de la figure

La figure unique représente de façon schématique des éléments d'un répertoire électronique conforme à l'invention, dans une mise en oeuvre particulière de celle-ci.

### Description détaillée de mises en oeuvre particulières de l'invention

Comme le montre la figure unique, le répertoire comporte un serveur central 10 relié à une pluralité de terminaux de communication 12a, 12b par un réseau de télécommunication 14.

Le serveur central 10 inclut, dans une mémoire, une base de données 16 comportant une pluralité de fichiers 18a, 18b, 18c.

La base de données contient toutes les références du ou des utilisateurs du répertoire. Comme indiqué précédemment, il s'agit par exemple d'un ensemble d'informations incluant des noms de correspondants ou de services, leurs numéros d'appel ou adresses d'accès, et éventuellement d'autres indications complémentaires.

Les références sont distribuées dans les fichiers 18a, 18b, 18c qui sont associés chacun à un utilisateur particulier, par exemple. Un ou plusieurs fichiers peuvent être aussi communs à plusieurs utilisateurs.

Dans le mode de réalisation illustré, le serveur central 10 inclut également un processeur 20 pour la recherche des références.

Les caractères alphanumériques saisis sur un clavier 22a, 22b d'un terminal de communication sont transférés par l'intermédiaire d'un modem 24a, 24b et par l'intermédiaire du réseau 14 vers le processeur du serveur central.

Le processeur 20 recherche alors dans la base de données, et plus particulièrement dans un fichier sélectionné par l'utilisateur, les références comportant les caractères alphanumériques saisis. Les informations concernant ces références sont alors transférées vers le terminal appelant, par l'intermédiaire du réseau 14.

Ces informations sont transmises via le modem 24a, 24b à une interface de sortie 26a, 26b du terminal.

L'interface de sortie peut être un écran d'affichage 26a, ce qui est le cas pour le terminal 12a de la figure. Dans ce cas, les informations correspondant aux références sélectionnées sont affichées sur l'écran 26a. L'utilisateur peut, par exemple avec un curseur déplaçable sur l'écran, choisir le numéro d'appel qu'il souhaite composer. Ce numéro est alors composé automatiquement par un numéroteur du terminal.

L'interface de sortie peut aussi comporter un système acoustique 26b à haut-parleur comme pour le terminal 12b de la figure.

Le serveur central dispose à cet effet d'un synthétiseur sonore 28 et transmet au terminal 12b des signaux correspondant à un message vocal. Ce message vocal est restitué par le système acoustique de l'interface de sortie 26 et contient, en particulier, les informations des références sélectionnées.

Grâce à cette caractéristique, le serveur 10 peut être interrogé à partir d'un simple appareil téléphonique.

Le serveur central 10 comporte également un système de conversion 30 programmé, qui, en fonction de l'origine géographique d'un appel de consultation du répertoire permet de transmettre un ensemble de références, par exemple un fichier, en ajoutant aux numéros d'appel de chaque référence un numéro indicatif particulier.

Comme indiqué précédemment, le système de conversion 30 peut en particulier ajouter aux numéros le code d'accès vers le pays ou la zone géographique de l'adresse d'un correspondant, à partir du pays d'où le répertoire est consulté.

Une information contenant l'indication du pays ou de la zone géographique du terminal appelant doit alors être transmise vers le serveur central 10.

Ceci peut se faire en invitant l'utilisateur à identifier le pays ou la zone d'appel. L'opération peut aussi être automatique avec un transfert vers le serveur central du numéro de poste terminal appelant.

Le serveur central peut en outre être équipé de moyens d'authentification de chaque utilisateur. L'utilisateur doit composer, par exemple un code qui lui est propre et qui lui donne accès à un ou plusieurs fichiers du répertoire.

Finalement, grâce au serveur central, un utilisateur peut consulter le répertoire quel que soit le lieu d'appel : de son bureau dans l'entreprise, de sa résidence principale, d'une résidence secondaire, à partir de son automobile, et sans faire d'effort pour mémoriser des codes ou numéros abrégés de ses correspondants.

Selon une autre mise en oeuvre de l'invention, simplifiée, l'ensemble des éléments du répertoire électronique, c'est-à-dire la base de données 16, le processeur 20 et les interfaces, peuvent être regroupés dans un même appareil. Un tel appareil n'offre pas les avantages du dispositif à serveur central décrit ci-dessus mais autorise cependant une recherche simplifiée et interactive des numéros d'appel des correspondants, conformément à l'invention.

## Revendications

1. Répertoire électronique comprenant :
- une base de données (16) avec au moins un fichier (18a, 18b, 18c), chaque fichier comportant des informations correspondant à des caractères alphanumériques et associées respectivement à une pluralité de références du répertoire,
- au moins une interface d'entrée (22a, 22b) sur laquelle un utilisateur peut entrer au moins un caractère alphanumérique pour rechercher une référence,
- au moins un processeur (20) pour sélectionner dans au moins un fichier des références comportant chaque caractère alphanumérique saisi, et
- au moins une interface de sortie (26a, 26b) pour transmettre à l'utilisateur les informations associées à chaque référence sélectionnée,
l'interface de sortie (26a, 26b) étant apte à transmettre à l'utilisateur une information l'invitant à entrer au moins un caractère alphanumérique supplémentaire sur l'interface d'entrée lorsqu'un nombre de références sélectionnées est supérieur à un nombre prédéterminé, et à transmettre à l'utilisateur lesdites informations associées aux références sélectionnées lorsque le nombre de références sélectionnées est inférieur ou égal au nombre prédéterminé.

2. Répertoire selon la revendication 1, caractérisé en ce que l'interface de sortie (26a) comporte un écran d'affichage alphanumérique.

3. Répertoire selon la revendication 1, caractérisé en ce que l'interface de sortie (26b) comporte un système acoustique pour transmettre les informations sous forme sonore.

4. Répertoire selon la revendication 1, caractérisé en ce qu'il comporte un serveur central (10) incluant la base de données (16), et au moins un terminal (12a, 12b) comprenant les interfaces d'entrée (22a, 22b) et de sortie (26a, 26b), et relié au serveur central par un réseau de télécommunications (14), le serveur et chaque terminal comportant des moyens de téléchargement pour transférer des informations de fichiers sélectionnés par l'utilisateur du serveur central vers chaque terminal.

5. Répertoire selon la revendication 4, caractérisé en ce que le serveur central inclut en outre le processeur (20) de sélection des références.

6. Répertoire selon la revendication 4, caractérisé en ce que chaque interface comporte un processeur de sélection des références.

7. Répertoire selon la revendication 4, caractérisé en ce que le serveur central comporte des moyens d'authentification de chaque utilisateur.

8. Répertoire selon la revendication 4, caractérisé en ce qu'il comporte un système de conversion (30) des informations en fonction d'une situation géographique de chaque terminal.

9. Répertoire électronique selon la revendication 1, caractérisé en ce qu'il comporte un système de mise à jour de fichiers associés à au moins un utilisateur, pour retenir dans les fichiers des références que l'utilisateur sélectionne avec une fréquence supérieure à une fréquence prédéterminée.
